# EUROPEAN PATENT APPLICATION

(11) **EP 4 462 548 A1**
(43) Date of publication of application: **13.11.2024**
(21) Application number: 23172466.7
(22) Date of filing: 09.05.2023
(51) Int. Cl.: H01M 10/42, H01M 10/48, H02J 7/00, H01M 50/284, H01M 50/30

(54) **THERMAL RUNAWAY DETECTION CIRCUIT**

(71) Applicant: VOLVO TRUCK CORPORATION, 405 08 Göteborg (SE)
(72) Inventor: LIDSTRÖM, Emil, 423 56 Torslanda (SE)
(74) Representative: Ström & Gulliksson AB

(57) **Abstract**

A thermal runaway detection circuit (**100**) is presented. The thermal runaway detection circuit (**100**) comprises a processing circuit (**110**), a first electric conduit (**121**) configured to connect the processing circuit (**110**) to a first sensor circuit (**201**) and a second electric conduit (**122**) configured to connect the processing circuit (**110**) to a second sensor circuit (**202**). A portion (**121'**) of the first electric conduit (**121**) and a portion (**122'**) of the second electric conduit (**122**) between the processing circuit (**110**) and the respective sensor circuit (**201**, **202**) are configured to be arranged at an over pressure relief path (**205**) of a battery device (**200**). The processing circuit (**110**) is configured to obtain first data via the first electric conduit (**121**) and second data via the second electric conduit (**122**), and generate a thermal runaway indication (**101**) based on the first data and the second data.

## Description

### TECHNICAL FIELD

The disclosure relates generally to safety arrangements for power sources. In particular aspects, the disclosure relates to circuitry for detection of thermal runaway in a battery. The disclosure can be applied to battery systems of heavy-duty vehicles, such as trucks, buses, and construction equipment, among other vehicle types. Although the disclosure may be described with respect to a battery system of a particular vehicle, the disclosure is not restricted to battery systems for vehicles.

### BACKGROUND

A number of electrical vehicles powered by batteries is constantly increasing. This has pushed the development of battery technology and energy density of batteries has increased significantly in the past years. With the increase energy density, there is an increased risk of the battery experiencing thermal runaway.

Thermal runaway in batteries is a phenomenon in which a temperature of a battery increases rapidly and uncontrollably. This leads to a cascade of reactions that may result in a fire or an explosion. Thermal runaway may occur in any type of battery, but is more common in lithium-ion batteries due to their high energy density.

The thermal runaway process may be initiated by an external factor such as overcharging, short-circuiting, physical damage to the battery, or exposure to high temperatures. Once initiated, the thermal runaway can quickly become self-sustaining as the heat generated by the chemical reactions within the battery further increases the temperature, leading to a rapid increase in the rate of these reactions.

The consequences of thermal runaway may be severe. Thermal runaway may lead to release of toxic gases, fire, and/or explosion, depending on the type and size of the battery. To prevent thermal runaway, battery manufacturers employ various safety measures, including using materials that are less prone to thermal runaway, incorporating thermal management systems, and implementing battery management systems that monitor and control the battery's charging and discharging cycles. These systems may be expensive and prone to give false positives which causes unnecessary downtime for e.g. a vehicle powered by such a battery.

There is a need for a system, device or method that will provide a reliable indication that thermal runaway is imminent which may be utilized to generate e.g. warnings or alerts.

From the above, it is understood that there is a need for improvements and/or alternatives.

### SUMMARY

According to a first aspect of the disclosure, a thermal runaway detection circuit is presented. The thermal runaway detection circuit comprises a processing circuit, a first electric conduit configured to connect the processing circuit to a first sensor circuit and a second electric conduit configured to connect the processing circuit to a second sensor circuit. A portion of the first electric conduit and a portion of the second electric conduit between the processing circuit and the respective sensor circuit are configured to be arranged at an over pressure relief path of a battery device. The processing circuit is configured to obtain first data via the first electric conduit and second data via the second electric conduit, and generate a thermal runaway indication based on the first data and the second data. A technical benefit may include decreasing a risk of generating false thermal runaway indications.

In some examples, including in at least one preferred example, optionally, the processing circuit is configured to generate the thermal runaway indication responsive to the first data being outside a first interval and the second data being outside a second interval. This is beneficial as it decreases a risk of generating false thermal runaway indications.

In some examples, including in at least one preferred example, optionally, the thermal runaway detection circuit further comprises a first impedance control circuit connected to the first electric conduit between the processing circuit and the over pressure relief path and/or a second impedance control circuit connected to the second electric conduit between the processing circuit and the over pressure relief path. This is beneficial as it ensures a controlled impedance at the electrical conduit connected to the impedance control circuit.

In some examples, including in at least one preferred example, optionally, the processing circuit is configured to generate the thermal runaway indication responsive to the first data indicating a first data maximum value or a first data minimum value and/or the second data indicating a first data maximum value or a first data minimum value. This is beneficial as it decreases a risk of generating false thermal runaway indications.

In some examples, including in at least one preferred example, optionally, at least a portion of the first electric conduit and a portion of the second electric conduit are arranged on a printed circuit board, PCB. This simplifies production and assembly of the thermal runaway detection circuit.

In some examples, including in at least one preferred example, optionally, the PCB is a flexible printed circuit, FPC. This simplifies production and assembly of the thermal runaway detection circuit.

In some examples, including in at least one preferred example, optionally, the thermal runaway detection circuit further comprises a first impedance control circuit connected to the first electric conduit between the processing circuit and the over pressure relief path and a second impedance control circuit connected to the second electric conduit between the processing circuit and the over pressure relief path. The processing circuit is configured to generate the thermal runaway indication responsive to the first data indicating a first data maximum value or a first data minimum value and the second data indicating a first data maximum value or a first data minimum value. The processing circuit is further configured to generate the thermal runaway indication responsive to the first data being outside a first interval and the second data being outside a second interval. At least a portion of the first electric conduit and a portion of the second electric conduit are arranged on a printed circuit board, (PCB). The PCB is a flexible printed circuit (FPC).

According to a second aspect of the disclosure, a battery device is presented. The battery device comprises at least one battery cell, a first sensor circuit, a second sensor circuit, a housing enclosing the at least one battery cell and comprising an over pressure relief path, and a thermal runaway detection circuit of the first aspect connected to the first sensor circuit and the second sensor circuit. The first electric conduit and the second electric conduit of the thermal runaway detection circuit are arranged at the pressure relief path.

In some examples, including in at least one preferred example, optionally, the battery device further comprises a pressure relief valve arranged to control the over pressure relief path.

In some examples, including in at least one preferred example, optionally, the first sensor circuit and/or the second sensor circuit are one of a temperature sensor, a voltage sensor or a current sensor.

According to a third aspect of the disclosure, a vehicle comprising at least one battery device of the second aspect is presented.

In some examples, including in at least one preferred example, optionally, the vehicle is configured to alert an operator of the vehicle responsive to the battery device generating a thermal runaway indication.

According to a fourth aspect of the disclosure, a method of detecting thermal runaway of a battery device of the second aspect is presented. The method comprises obtaining first data from the first electric conduit and second data from the second electric conduit, and generating a thermal runaway indication based on the first data and the second data.

In some examples, including in at least one preferred example, optionally, generating a thermal runaway indication comprises generating the thermal runaway indication responsive to the first data being outside a first interval, and the second data being outside a second interval.

In some examples, including in at least one preferred example, optionally, generating a thermal runaway indication comprises generating the thermal runaway indication responsive to the first data indicating a first data maximum value or a first data minimum value, and the second data indicating a first data maximum value or a first data minimum value.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary thermal runaway detection circuit according to an example.
**FIG. 3** is an exemplary battery device according to an example.
**FIG. 4** are exemplary time series plots of data according to an example.
**FIG. 5a** is an exemplary impedance control circuit according to an example.
**FIG. 5b** is an exemplary impedance control circuit according to an example.
**FIG. 6** is an exemplary battery device according to an example.
**FIG. 7** is an exemplary battery pack according to an example.
**FIG. 8** is an exemplary method for detecting thermal runaway according to an example.
**FIG. 9** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

As previously indicated, thermal runaway of a battery cell may cause release of toxic gases, fire, and/or explosion. In order to reduce a risk of e.g. injury, or even death, of persons in a vicinity of a battery cell undergoing thermal runaway, a reliable warning system is desired. Such warning systems are especially important for vehicles as these are generally operated by a driver that should evacuate the vehicle immediately in case of thermal runaway of one or more battery cells of the vehicle. In addition to this, some vehicles offer live in possibilities for a driver which means that a driver may sleep or rest in a vehicle. This is common for heavy duty vehicles such as trucks.

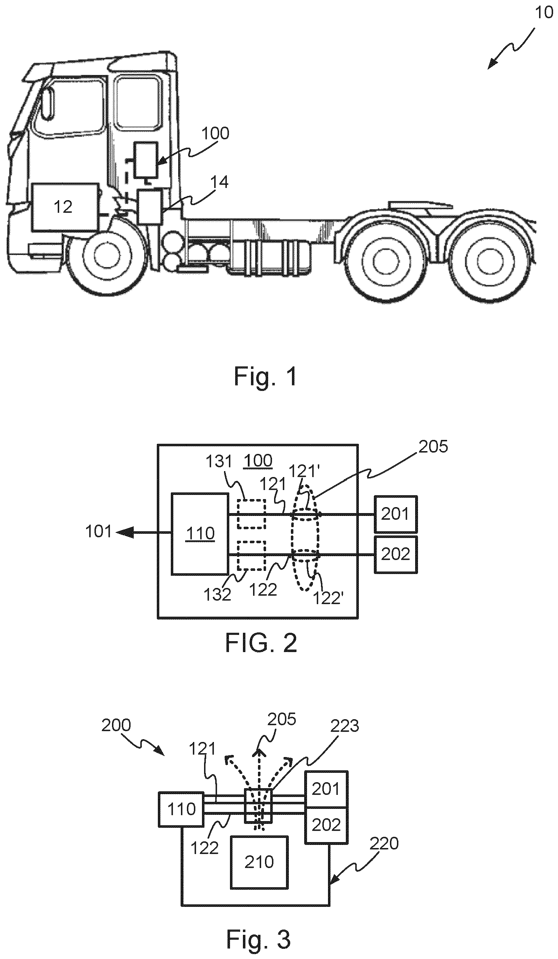

**FIG. 1** is an exemplary view of a vehicle **10** according to an example is shown. The vehicle is shown as a truck, but the teachings of the present disclosure are applicable not only to any type of vehicle **10,** but to any type of battery system, not only battery systems for vehicles **10.**

The vehicle **10** of **FIG. 1** is an, at least partly, electrically propelled vehicle **10.** To this end, the vehicle **10** comprises one or more motors **12** arranged to propel the vehicle **10** and one or more electrical power sources **14** configured to provide power to the one or motors **12** and/or other functionality of the vehicle **10.** The vehicle further comprises a thermal runaway detection circuit **100** arranged to detect thermal runaway in one or more battery cells of the vehicle **10.**

Although the vehicle **10** of **FIG. 1** is described as an, at least partly, electrically propelled vehicle **10,** the vehicle may, in some examples, be a vehicle **10** propelled solely by a combustion engine. In such examples, electrical power sources **14** may be provided to power electronics controlling the combustion engine (fuel injection etc.) or comfort systems of the vehicle (thermal control of a cabin of the vehicle, auxiliary equipment such as refrigerators, GPS etc.). In short, the thermal runaway detection circuit **100** may be utilized with any suitable electrical power source **14** at a risk of experiencing thermal runaway or similar effects.

**FIG. 2** is an exemplary block diagram of a thermal runaway detection circuit **100** according to some examples of the present disclosure. The thermal runaway detection circuit **100** comprises at least two electrical conduits **121, 122** and at least one processing circuit **110.** The electrical conduits **121, 122** may be any suitable conduit conducting electricity such as a conducting wire, a trace on a circuit board etc. The electrical conduits **121, 122** are electrically connected to the processing circuit **110** and configured to provide an electrical connection between the processing circuit **110** and respective peripheral circuits **201, 202.** The peripheral circuits **201, 202** may be any suitable circuit such as, but not limited to, further processing circuits, memory circuits, amplifier circuits, control circuits etc. In an advantageous example, the peripheral circuits **201, 202** are sensor circuits such as, but not limited to, voltage sensor circuits, current sensor circuits, temperature sensor circuits etc.

In **FIG. 2****,** a first electrical conduit **121** is configured to connect the processing circuit **110** to a first peripheral circuit **201** in the form of a first sensor circuit **201.** In **FIG. 2****,** a second electrical conduit **122** is configured to connect the processing circuit **110** to a second peripheral circuit **202** in the form of a second sensor circuit **202.** The first sensor circuit **201** is advantageously different from the second sensor circuit **202.**

In some examples, the first sensor circuit **201** is a voltage sensor circuit and the second sensor circuit **202** is a temperature sensor circuit.

The processing circuit **110** may be any suitable processing circuit **110.** Generally, battery devices are provided with processing circuits of some sort configured to monitor e.g. a temperature and a voltage of an associated battery or battery cell(s). The processing circuit **110** of the thermal runaway detection circuit **100** may very well be such a processing circuit. In some examples, the processing circuit **110** of the thermal runaway detection circuit **100** is a processing circuit **110** electrically connected to a processing circuit connected to the sensor circuit **201, 202** by the electrical conduits **121, 122.** With that said, the sensor circuits **201, 202** are connected to the processing circuit **110** of the thermal runaway detection circuit **100** via the electrical conduits **121, 122,** but the connection may be via further (processing) circuits.

The processing circuit **110** is configured to generate thermal runaway indication **101** responsive to determining that a thermal runaway occurring. This will be further detailed in the following. It should be mentioned already now that there may be a plurality of processing circuit **110** involved in generating the thermal runaway indication **101.** Not all processing circuits **110** need to be mounted at the battery cells and/or may be comparably simple processing circuits **110** (or analog front end, (AFE)) that may be arranged e.g. at a vicinity of the battery cells and configured to e.g. obtain the data from one or more sensor circuits **201, 202** and provide that data to processing circuit **110** located distal from the battery cells.

The inventor behind the present disclosure have realized that, by arranging the electrical conduits **121, 122** such that they are damaged in case of thermal runaway of a battery device **200** (see **FIG. 3**), thermal runaway may be accurately and reliably detected. To this end, the first electrical conduit **121** and the second electrical conduit **122** are configured to be arranged at an over pressure relief path **205** of a battery device **200.** As the skilled person appreciates, when it is specified that the first electrical conduit **121** and the second electrical conduit **122** are configured to be arranged at the over pressure relief path **205,** this is generally to be interpreted as a portion **121'** of the first electrical conduit **121** and a portion **122'** of the second electrical conduit **122** being configured to be arranged at the over pressure relief path **205.** The term "at the over pressure relief path **205"** may be interpreted as in the vicinity of the over pressure relief path **205,** across the over pressure relief path **205,** adjacent to the over pressure relief path **205** and may be interpreted differently for each of the first electrical conduit **121** and the second electrical conduit **122.** Functionally, the first electrical conduit **121** and the second electrical conduit **122** are configured to be arranged at the over pressure relief path **205** such that the first electrical conduit **121** and the second electrical conduit **122** are damaged (e.g. broken) responsive to triggering of a pressure relief valve **223** (see **FIG. 3**) associated with the over pressure relief path **205.**

This is illustrated in **FIG. 3** wherein an exemplary view of a battery device **200** is shown. The battery device **200** comprises one or battery cells **210.** In **FIG. 3****,** only one battery cell **210** is shown, but the battery device **200** may comprise any number of battery cells **210.** The battery device **200** further comprises a housing **220** enclosing the battery cell(s) **210.** In **FIG. 3****,** the peripheral circuits **201, 202** are shown as external to the housing **220.** In some examples, the peripheral circuits **201, 202** are internal to the housing **220.** In some examples, the battery device **200** comprises the peripheral circuits **201, 202.** In some examples, the thermal runaway detection circuit **100** is separate from the battery device **200.** In some examples, the battery device **200** comprises the thermal runaway detection circuit **100.**

In **FIG. 3****,** the housing **220** is provided with a pressure relief valve **223.** This is one example, and pressure relief valves **223** may, additionally, or alternatively, be provided in e.g. casings of the battery cells **210.** The pressure relief valve **223** is provided in order to prevent the battery device **200** from being disfigured, exploding or rupturing due to excessive pressure build-up within the housing **220.** Such pressure build-up may result from the battery cell **210** battery being charged. Venting of gas during charging may be comparably harmless as a comparably small volume of gas is released. If a thermal runaway occurs, gases released will have a comparably higher temperature and a volume of gases released will be comparably greater.

The vented gases will escape the housing **220** through the pressure relief valve **223** along an over pressure relief path **205** of the battery device **205.** The over pressure relief path **205** is a fluid path of vented gases (heated fumes) and is a path originating inside the housing **220,** passing through the pressure relief valve **223** and ending outside the housing **220.**

In **FIG. 3****,** the first electric conduit **121** and the second electric conduit **122** are arranged at the over pressure relief path **205.** The first electric conduit **121** and the second electric conduit **122** are arranged such that the over pressure relief path **205** is provided between the processing circuit **110** and the first and second sensor circuit **201, 202.** This means that, responsive to heated fumes being released through the pressure relief valve **223** (along the pressure relief path **205**), the first and second electric conduits **121, 122** will be subjected to the heated fumes and break. As the first and second electric conduits **121, 122** are broken by the vented gases, the electrical connection between the processing circuit **110** and the sensor circuits **201, 202** is broken.

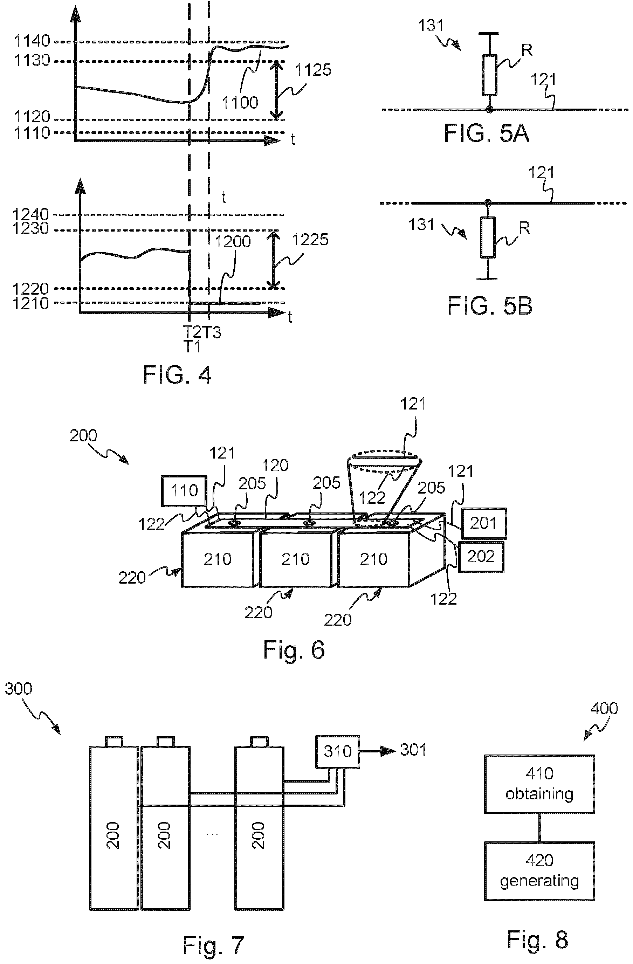

By arranging the first electrical conduit **121** and the second electrical conduit **122** as exemplified above, a thermal runaway may be reliably distinguished from other failures and a risk of false alarms, i.e. false positive detections, is greatly reduced. To exemplify, a voltage sensor may occasionally fail causing incorrect readings that may correspond to a damaged or broken electrical conduit **201, 202.** It may be that external disturbances caused by e.g. electromagnetic interference (EMI) will bias, saturate or disturb an analog to digital converter configured to sense a temperature of the battery cell **210** by a sensor circuit **201, 202** in the form of a thermistor resulting in readings that may correspond to a damaged or broken electrical conduit **121, 122.** However, a probability of both sensor circuits **201, 202** malfunctioning at a same point in time is highly unlikely, and by configuring the processing circuit **110** to monitor two independent sensor circuits **201, 202** via two independent electric conduits **121, 122,** thermal runaway may be reliably detected. To this end, the processing circuit **110** is advantageously configured to monitor data **1100, 1200** (see **FIG. 4**) at the electrical conduits **121, 122.**

In **FIG. 4****,** two exemplary graphs of data **1100, 1200** versus time is shown. In the top graph in **FIG. 4****,** a time series plot of first data **1100** is shown, in the bottom graph in **FIG. 4****,** a time series plot of second data **1200** is shown. The data **1100, 1200** shown in **FIG. 4** is exemplary and provided as basis for explanation only. The data **1100, 1200** may be analogue or digital data. The first data **1100** is data obtained from the first electric conduit **121** and the second data **1200** is data obtained from the second electric conduit **122.** With that said, assuming that the first and second conduits are undamaged, the first data **1100** is data obtained from the first sensor circuit **201** and the second data **1200** is data obtained from the second sensor circuit **202.** Generally, the first data **1100** is associated with a first minimum data value **1110** indicating a lowest possible data value indicatable by the first data **1100** and a first data maximum data value **1140** indicating a highest possible data value indicatable by the first data **1100.** Correspondingly, the second data **1200** is associated with a second minimum data value **1210** indicating a lowest possible data value indicatable by the second data **1200** and a second data maximum data value **1240** indicating a highest possible data value indicatable by the second data **1200.** As the skilled person will understand, the minimum and maximum data values **1110, 1210, 1140, 1240** indicatable by the first or second data **1100, 1200** may be different or the same for the same for the first and second data **1100, 1200.** Further the minimum and maximum data values **1110, 1210, 1140, 1240** indicatable by the first or second data **1100, 1200** may be determined by e.g. number of bits in a digital representation of the first or second data **1100, 1200,** control voltages of the processing circuit **110** or sensor circuits **201, 202** etc. The first data **1100** may be compared to a first interval **1125** defined as an interval between a first interval first level **1120** and a first interval second level **1130.** Correspondingly, the second data may be compared to a second interval **1225** defined as an interval between a second interval first level **1220** and a second interval second level **1230.**

Based on the data **1100, 1200** it may be determined it the associated electrical conduit **121, 122** is damaged or not. In **FIG. 4****,** a thermal runaway occurs at a first point in time **T1** indicated by the leftmost vertical dashed line. As the thermal runaway occurs, the pressure relief valve **223** of the associated battery device **200** is opened, releasing heated gases that cause the first electrical conduit **121** and the second electrical conduit **122** to break. As a result, in **FIG. 4****,** the second data **1200** assumes the second data minimum value **1210** at a second point in time **T2** occurring substantially at the same time as the first point in time **T1.** At a third point in time **T3,** indicated by the leftmost vertical line in **FIG. 4****,** the first data **1100** assumes a value outside the first interval **1125.** Assuming that the first interval **1125** and second interval **1225** indicate allowable, expected or normal data values for the first and second data **1100, 1200** respectively, both the first data **1100** and the second data **1200** exhibit erroneous, false or unexpected values after the third point in time **T3.** Responsive thereto, the processing circuit **110** is advantageously configured to generate the thermal runaway indication **101** (**FIG. 2**).

In **FIG. 4****,** it may be assumed that the first electrical conduit **121** is connected to a first sensor circuit **201** in the form of a voltage sensor. An input at the processing circuit may be a high impedance input which means that the first electrical conduit **121** is left at a high impedance state at the processing circuit **110** after being broken by the thermal runaway at the first point in time **T1.** The high impedance state causes the electrical conduit **121** to be charged by e.g. stray electromagnetic fields. This causes the first data **1100** obtained by the processing circuit **110** to indicate an increase in voltage. However, the second data **1200** assumes the second data minimum value **1210** at the second point in time **T2.** This may be due to the second electrical conduit **122** having a pull-down circuitry arranged between the over pressure relief path **205** and the processing circuit **110.**

From **FIG. 4****,** it may be concluded that indication of a broken electrical conduit **121, 122** is provided faster at the second electrical conduit **122** than the first electrical conduit **121** due to the controlled impedance of the second electrical conduit **122.** To this end, see **FIG. 2****,** a first impedance control circuit **131** may be connected to the first electric conduit **121** between the processing circuit **110** and the over pressure relief path **205.** Alternatively, or additionally, a second impedance control circuit **132** may be connected to the second electric conduit **122** between the processing circuit **110** and the over pressure relief path **205.**

In **FIG. 5**a, the first impedance control circuit **131** is shown as a pull-up resistor **R** arranged on the first electrical conduit **121.** In **FIG. 5**b, the first impedance control circuit **131** is shown as a pull-down resistor **R** arranged on the second electric conduit **121.** The skilled person will understand the second impedance control circuit **132** may be exemplified correspondingly to the first impedance control circuit **131.** In some examples, the first impedance control circuit **131** and/or the second impedance control circuit **132** is comprised in the processing circuit **110.** In some examples, the processing circuit **110** is an MCU wherein ports connected to the first electric conduit **121** and the second electrical conduit **122** may be configured with an, to the processing circuit **110,** internal pull-up or pull-down impedance.

In **FIG. 6****,** a battery device comprising more than one battery cell **210** is shown. In **FIG. 6****,** a portion of the first electrical conduit **121** and a portion of the second electrical conduit **122** are provided on a printed circuit board (PCB) **120,** see magnified portion of PCB **120** in **FIG. 6****.** In **FIG. 6****,** the PCB **120** is arranged across the over pressure relief paths **205** of each of the battery cells **210.** In some examples, the PCB **120,** and thereby a portion of the first electrical conduit **121** and a portion of the second electrical conduit **122,** may be arranged on the housing **220** of a battery device **200** such as the battery device **200** shown in **FIG. 3****.** Arranging a portion of the first electrical conduit **121** and a portion of the second electrical conduit **122** on the PCB is beneficial at it simplified assembly and arrangement of the electric conduits **121, 122** at the over pressure relief path **205** of an associated battery device **200.** Further, arranging a portion of the first electrical conduit **121** and a portion of the second electrical conduit **122** on the PCB **120** improves stability of the battery device **200** and reduces a risk at the electric conduits **121, 122** are damaged by e.g. vibrations etc.

In some further examples, the PCB **120** may a flexible printed circuit (FPC) further simplifying assembly and arrangement of the electrical conduits. The FPC further reduces a risk that the electric conduits **121, 122** are damaged by e.g. vibrations.

In **FIG. 7****,** a battery pack **300** according to one example is shown. The battery pack **300** comprises two or more battery devices **200** as presented herein. The battery pack **300** of **FIG. 7** is shown as comprising three battery devices **200,** but the battery pack **300** may comprise any suitable number of battery devices **200.** The battery pack **300** further comprises a battery pack processing circuit **310.** The battery pack processing circuit **310** is advantageously connected to each of the processing circuits **110** of the thermal runaway detection circuits **100**) of the battery devices **200** of the battery pack **300.**

Advantageously, the battery pack processing circuit **310** is configured to obtain thermal runaway indications **101** from the processing circuits **110** of the thermal runaway detection circuits **100** of the battery devices **200** of the battery pack **300.** The battery pack processing circuit **310** may be configured to generate a battery pack thermal runaway indication **301.** The battery pack thermal runaway indication is advantageously generated responsive to obtaining the battery pack processing circuit **310** obtaining a thermal runaway indication **101** from at least one of the processing circuits **110** of the two or more battery devices **200** of the battery pack **300.**

In some examples, in order to further decrease a risk of false thermal runaway alarms, the battery pack processing circuit **310** may be configured to generate the battery pack thermal runaway indication **301** after obtaining thermal runaway indications **101** from at least two of the processing circuits **110** of the battery devices **200** of the battery pack **300.**

From the description of the thermal runaway detection circuit **100** and the associated battery devices **200** and battery packs **300** given herein, it is clear that a more reliable device for detecting thermal runaway is provided. Advantageously, in examples wherein the thermal runaway detection circuit **100,** the associated battery devices **200** or battery packs **300** are provided in a vehicle **10,** see **FIG. 1****,** the vehicle **10** is advantageously configured to alert an operator of the vehicle **10** responsive to the thermal runaway detection circuit **100,** the associated battery devices **200** or battery packs **300** generating a thermal runaway indication **101, 301.**

In **FIG. 8** a method **400** of detecting thermal runaway is shown. The method **400** is suitable for detecting thermal runaway in a battery device **200** as presented herein. The method comprises obtaining **410** first data **1100** from the first electric conduit **121** and second data **1200** from the second electric conduit **122.** The method **400** further comprises generating **420** the thermal runaway indication **101** based on the first data **1100** and the second data **1200** as taught herein.

In some examples, the processing circuit **110** is configured to perform the method of **FIG. 8****.**

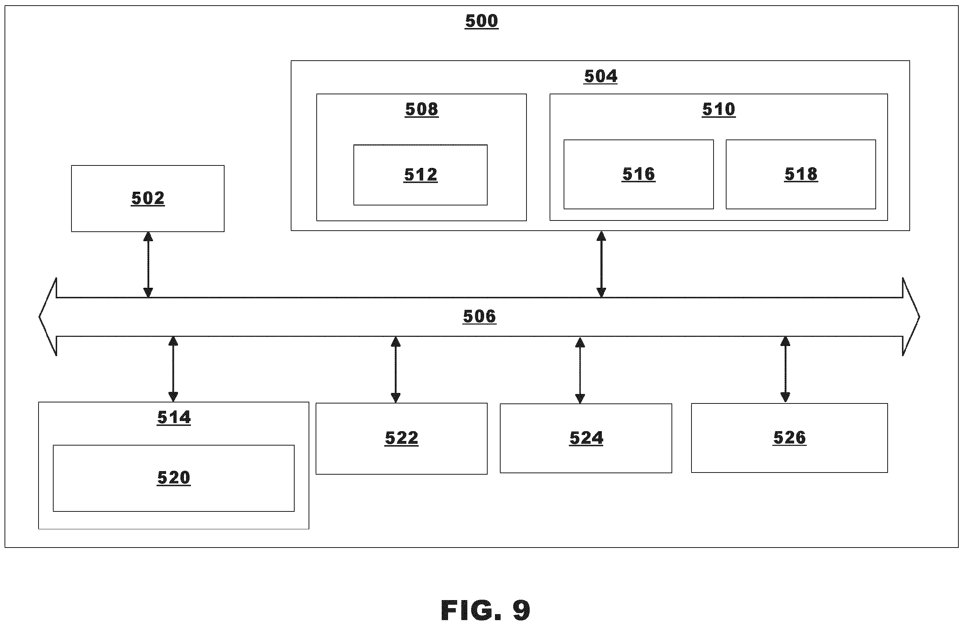

**FIG. 9** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN, an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The processing circuitry **502** may be the processing circuit **110** of the thermal runaway detection circuit **100,** the processing circuit **310** of the battery pack **300** or configured to perform the features presented with reference to the processing circuit **110** of the thermal runaway detection circuit **100,** the processing circuit **310** of the battery pack **300.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) **1394** serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.
Example 1. A thermal runaway detection circuit **100,** comprising a processing circuit **110,** a first electric conduit **121** configured to connect the processing circuit **110** to a first sensor circuit **201** and a second electric conduit **122** configured to connect the processing circuit **110** to a second sensor circuit **202,** a portion **121'** of the first electric conduit **121** and a portion **122'** of the second electric conduit **122** between the processing circuit **110** and the respective sensor circuit **201, 202** are configured to be arranged at an over pressure relief path **205** of a battery device **200,** wherein the processing circuit **110** is configured to: obtain first data **1100** via the first electric conduit **121** and second data **1200** via the second electric conduit **122,** and generate a thermal runaway indication **101** based on the first data **1100** and the second data **1200.**
Example 2. The thermal runaway detection circuit **100** of example 1, wherein the processing circuit **110** is configured to generate the thermal runaway indication **101** responsive to the first data **1100** being outside a first interval **1125** and the second data **1200** being outside a second interval **1225.**
Example 3. The thermal runaway detection circuit **100** of any of examples 1-2, further comprising a first impedance control circuit **131** connected to the first electric conduit **121** between the processing circuit **110** and the over pressure relief path **205** and/or a second impedance control circuit **132** connected to the second electric conduit **122** between the processing circuit **110** and the over pressure relief path **205.**
Example 4. The thermal runaway detection circuit **100** of example 3, wherein the processing circuit **110** is configured to generate the thermal runaway indication **101** responsive to the first data **1100** indicating a first data maximum value **1140** or a first data minimum value **1100** and/or the second data **1200** indicating a first data maximum value **1240** or a first data minimum value **1210.**
Example 5. The thermal runaway detection circuit **100** of any of examples 1-4, wherein at least a portion of the first electric conduit **121** and a portion of the second electric conduit **122** are arranged on a printed circuit board, PCB, **120.**
Example 6. The thermal runaway detection circuit **100** of example 5, wherein the PCB **120** is a flexible printed circuit, FPC.
Example 7. The thermal runaway detection circuit **100** of example 1, further comprising a first impedance control circuit **131** connected to the first electric conduit **121** between the processing circuit **110** and the over pressure relief path **205** and/or a second impedance control circuit **132** connected to the second electric conduit **122** between the processing circuit **110** and the over pressure relief path **205,** wherein the processing circuit **110** is configured to generate the thermal runaway indication **101** responsive to the first data **1100** indicating a first data maximum value **1140** or a first data minimum value **1100** and the second data **1200** indicating a first data maximum value **1240** or a first data minimum value **1210;** the processing circuit **110** is further configured to generate the thermal runaway indication **101** responsive to the first data **1100** being outside a first interval **1125** and the second data **1200** being outside a second interval **1225;** at least a portion of the first electric conduit **121** and a portion of the second electric conduit **122** are arranged on a printed circuit board, PCB, **120,** wherein the PCB **120** is a flexible printed circuit, FPC.
Example 8. A battery device **200** comprising at least one battery cell **210,** a first sensor circuit **201,** a second sensor circuit **202,** a housing **220** enclosing the at least one battery cell **210** and comprising an over pressure relief path **205,** and a thermal runaway detection circuit **100** of any one of the preceding examples connected to the first sensor circuit **201** and the second sensor circuit **202,** wherein the first electric conduit **121** and the second electric conduit **122** of the thermal runaway detection circuit **100** are arranged at the pressure relief path **205.**
Example 9. The battery device **200** of example 8, further comprising a pressure relief valve **223** arranged to control the over pressure relief path **205.**
Example 10. The battery device **200** of example ay of examples 8-9, wherein the first sensor circuit **201** and/or the second sensor circuit **202** are one of a temperature sensor, a voltage sensor or a current sensor.
Example 11. A battery pack **300** comprising two or more battery devices **200** of any one of examples **8** to **10** and a battery pack processing circuit **310** connected to each of the processing circuits **110** of the two or more battery devices **200.**
Example 12. The battery pack **300** of example 11, wherein the battery pack processing circuit **310** is configured to generate a battery pack thermal runaway indication 301 responsive obtaining a thermal runaway indication **101** from at least one of the processing circuits **110** of the two or more battery devices **200.**
Example 13. The battery pack **300** of example 12, wherein the battery pack processing circuit **310** is configured to generate the battery pack thermal runaway indication **301** responsive obtaining thermal runaway indications **101** from at least two of the processing circuits **110** of the two or more battery devices **200.**
Example 14. A vehicle **10** comprising at least one battery device **200** of any one of examples **8** to **10.**
Example 15. The vehicle **10** of example 14, wherein the vehicle **10** is configured to alert an operator of the vehicle **10** responsive to the battery device **200** generating a thermal runaway indication **101.**
Example 16. The vehicle **10** of any of examples 14-15, wherein the vehicle **10** is a heavy-duty vehicle.
Example 17. A vehicle **10** comprising at least one battery pack **300** of any one of examples **12** or **13.**
Example 18. The vehicle **10** of example 17, wherein the wherein the vehicle **10** is configured to alert an operator of the vehicle **10** responsive to the battery pack **300** generating a battery pack thermal runaway indication **301.**
Example 19. The vehicle **10** of any of examples 17-18, wherein the vehicle **10** is a heavy-duty vehicle.
Example 20. A method **400** of detecting thermal runaway of a battery device **200** according to any one of example **8** to **10,** the method **400** comprising: obtaining **410** first data **1100** from the first electric conduit **121** and second data **1200** from the second electric conduit **122,** and generating **420** a thermal runaway indication **101** based on the first data **1100** and the second data **1200.**
Example 21. The method **400** of example 20, wherein generating **420** a thermal runaway indication **101** comprises generating the thermal runaway indication **101** responsive to the first data **1100** being outside a first interval **1125,** and the second data **1200** being outside a second interval **1225.**
Example 22. The method **400** of any of examples 20-21, wherein generating **420** a thermal runaway indication **101** comprises generating the thermal runaway indication **101** responsive to the first data **1100** indicating a first data maximum value **1140** or a first data minimum value **1100,** and the second data **1200** indicating a first data maximum value **1240** or a first data minimum value **1210.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A thermal runaway detection circuit (**100**), comprising a processing circuit (**110**), a first electric conduit (**121**) configured to connect the processing circuit (**110**) to a first sensor circuit (**201**) and a second electric conduit (**122**) configured to connect the processing circuit (**110**) to a second sensor circuit (**202**), a portion of the first electric conduit (**121**) and a portion of the second electric conduit (**122**) between the processing circuit (**110**) and the respective sensor circuit (**201**, **202**) are configured to be arranged at an over pressure relief path (**205**) of a battery device (**200**), wherein the processing circuit (**110**) is configured to:
obtain first data (**1100**) via the first electric conduit (**121**) and second data (**1200**) via the second electric conduit (**122**), and
generate a thermal runaway indication (**101**) based on the first data (**1100**) and the second data (**1200**).

2. The thermal runaway detection circuit (**100**) of claim 1, wherein the processing circuit (**110**) is configured to generate the thermal runaway indication (**101**) responsive to the first data (**1100**) being outside a first interval (**1125**) and the second data (**1200**) being outside a second interval (**1225**).

3. The thermal runaway detection circuit (**100**) of any of claims 1-2, further comprising a first impedance control circuit (**131**) connected to the first electric conduit (**121**) between the processing circuit (**110**) and the over pressure relief path (**205**) and/or a second impedance control circuit (**132**) connected to the second electric conduit (**122**) between the processing circuit (**110**) and the over pressure relief path (**205**).

4. The thermal runaway detection circuit (**100**) of claim 3, wherein the processing circuit (**110**) is configured to generate the thermal runaway indication (**101**) responsive to the first data (**1100**) indicating a first data maximum value (**1140**) or a first data minimum value (**1100**) and/or the second data (**1200**) indicating a first data maximum value (**1240**) or a first data minimum value (**1210**).

5. The thermal runaway detection circuit (**100**) of any of claims 1-4, wherein at least a portion of the first electric conduit (**121**) and a portion of the second electric conduit (**122**) are arranged on a printed circuit board, PCB, (**120**).

6. The thermal runaway detection circuit (**100**) of claim 5, wherein the PCB (**120**) is a flexible printed circuit, FPC.

7. The thermal runaway detection circuit (**100**) of claim 1, further comprising a first impedance control circuit (**131**) connected to the first electric conduit (**121**) between the processing circuit (**110**) and the over pressure relief path (**205**) and/or a second impedance control circuit (**132**) connected to the second electric conduit (**122**) between the processing circuit (**110**) and the over pressure relief path (**205**), wherein the processing circuit (**110**) is configured to generate the thermal runaway indication (**101**) responsive to the first data (**1100**) indicating a first data maximum value (**1140**) or a first data minimum value (**1100**) and the second data (**1200**) indicating a first data maximum value (**1240**) or a first data minimum value (**1210**); the processing circuit (**110**) is further configured to generate the thermal runaway indication (1**0**1) responsive to the first data (**1100**) being outside a first interval (**1125**) and the second data (**1200**) being outside a second interval (**1225**); at least a portion of the first electric conduit (**121**) and a portion of the second electric conduit (**122**) are arranged on a printed circuit board, PCB, (**120**), wherein the PCB (**120**) is a flexible printed circuit, FPC.

8. A battery device (**200**) comprising at least one battery cell (**210**), a first sensor circuit (**201**), a second sensor circuit (**202**), a housing (**220**) enclosing the at least one battery cell (**210**) and comprising an over pressure relief path (**205**), and a thermal runaway detection circuit (**100**) of any one of the preceding claims connected to the first sensor circuit (**201**) and the second sensor circuit (**202**), wherein the first electric conduit (**121**) and the second electric conduit (**122**) of the thermal runaway detection circuit (**100**) are arranged at the pressure relief path (**205**).

9. The battery device (**200**) of claim 8, further comprising a pressure relief valve (**223**) arranged to control the over pressure relief path (**205**).

10. The battery device (**200**) of any one of claims 8-9, wherein the first sensor circuit (**201**) and/or the second sensor circuit (**202**) are one of a temperature sensor, a voltage sensor or a current sensor.

11. A vehicle (**10**) comprising at least one battery device (**200**) of any one of claims 8-10.

12. The vehicle (**10**) of claim 11, wherein the vehicle (**10**) is configured to alert an operator of the vehicle (**10**) responsive to the battery device (**200**) generating a thermal runaway indication (**101**).

13. A method (**400**) of detecting thermal runaway of a battery device (**200**) according to any one of claim **8** to **10,** the method (**400**) comprising:
obtaining (**410**) first data (**1100**) from the first electric conduit (**121**) and second data (**1200**) from the second electric conduit (**122**), and
generating (**420**) a thermal runaway indication (**101**) based on the first data (**1100**) and the second data (**1200**).

14. The method (**400**) of claim 13, wherein generating (**420**) a thermal runaway indication (**101**) comprises generating the thermal runaway indication (**101**) responsive to the first data (**1100**) being outside a first interval (**1125**), and the second data (**1200**) being outside a second interval (**1225**).

15. The method (**400**) of claim 14, wherein generating (**420**) a thermal runaway indication (**101**) comprises generating the thermal runaway indication (**101**) responsive to the first data (**1100**) indicating a first data maximum value (**1140**) or a first data minimum value (**1100**), and the second data (**1200**) indicating a first data maximum value (**1240**) or a first data minimum value (**1210**).
